# EUROPEAN PATENT SPECIFICATION

(11) **EP 4 369 993 B1**
(45) Date of publication and mention of the grant of the patent: **17.06.2026**
(21) Application number: 22748081.1
(22) Date of filing: 13.07.2022
(51) Int. Cl.: A47G 19/02, B65D 81/34, C09K 5/06, F28D 20/02

(54) **CROCKERY COMPRISING MICROWAVE-ACTIVATABLE PHASE-CHANGE MATERIAL AND METHOD FOR PRODUCING CROCKERY**
GESCHIRR MIT MIKROWELLENAKTIVIERBAREM PHASENWECHSELMATERIAL UND VERFAHREN ZUR HERSTELLUNG VON GESCHIRR
VAISSELLE COMPRENANT MATÉRIAU À CHANGEMENT DE PHASE ACTIVABLES PAR MICRO-ONDES ET PROCÉDÉ DE PRODUCTION DE VAISSELLE

(30) Priority: 16.07.2021 BE 202105551
(43) Date of publication of application: 22.05.2024
(73) Proprietor: Promeco NV, 8510 Kortrijk (BE)
(72) Inventor: REDJAL, Karim, 8550 Zwevegem (BE); MERTENS, Pascal Gabriëlle Nestor, 1540 Herne (BE)
(74) Representative: Arnold & Siedsma
(86) International application number: PCT/IB2022/056455
(87) International publication number: WO 2023/285985

(56) References cited:
- WO-A1-96/36199
- US-A- 5 804 266
- US-A1- 2006 196 497
- US-B1- 6 183 855

## Description

### Field of the invention

The invention relates to crockery comprising a phase-change material mixture activatable by means of microwave radiation. The invention further relates to a method for producing and using crockery comprising a phase-change material mixture suitable for keeping food hot, wherein the phase transition from solid to liquid state of the phase-change material mixture can be achieved under the influence of microwave irradiation.

### Background

Several patents are known which are related to the application of phase-change materials contained in crockery for keeping food cool or warm, this by means of the latent energy which can be activated by the respective solidification or melting of the phase-change material and which can then be transferred to the food to be kept cool or warm after activation of the phase-change material.

In the case of application for keeping food warm, the necessary activation or phase transition (from solid to liquid state) is typically achieved by placing the crockery comprising phase-change material, typically with a melting point in the temperature range of 50 to 80°C, in an environment with a temperature higher than the melting point of the phase-change material. A heating cabinet at a temperature of 90°C or an oven set to a temperature of 120°C is thus for instance normally suitable for melting a phase-change material with a melting point of 70°C.

The time required for the phase transition is nevertheless relatively long, depending on the latent energy of the phase-change material and the quantity of phase-change material. For a phase-change material with a melting point of 75°C it may for instance take 90 minutes or longer to complete the phase transition at an ambient temperature of about 90°C (as in a regular heating cabinet). This long period of time needed for activating such crockery comprising phase-change material is an inherent drawback for application by both private and professional users.

Also known are phase-change materials which are activatable via microwave irradiation, for instance on the basis of sodium acetate trihydrate, with a melting point of 58°C, or for instance compound materials on the basis of a material mixture on the basis of a combination of a phase-change material and expanded graphite, as in for instance US9765201B2. US 5 804 266 A discloses crockery comprising a phase-change material mixture, wherein the phase-change material mixture comprises one or more organic phase-change materials selected from the group of organic acids, organic alcohols and organic esters, and carbon black microwave susceptors, wherein the phase-change material mixture is configured to be melted by means of microwave irradiation. The above stated known microwave-activatable phase-change materials however all have specific drawbacks, for instance inadequate melting points or a difficult production method, or a danger of electric discharge with potential fire risk during use.

An additional problem occurring in the (pre-)heating of crockery in a microwave oven is that the edges of plates, dishes and bowls may become too warm or too hot to handle by hand without protective material, such as for instance an oven glove, while the central portion of the crockery (on which or in which the food is placed) is still insufficiently warm to keep the food to be placed on that portion of the crockery warm.

### Summary of the invention

What is missing in the prior art is crockery which comprises phase-change material with a melting point suitable for keeping food warm, which can be activated (this being the phase transition from solid to liquid state) rapidly (in several minutes) by means of microwave irradiation, wherein the central portion of the crockery (surface for serving the food and cavity under this surface, where the microwave-activatable phase-change material is positioned) heats up sufficiently rapidly under the influence of microwave irradiation (while the phase-change material melts) and the edge portion of the crockery (which must be handled by the user) remains sufficiently cool and can consequently be handled without the need for protective material.

The present invention has for its object to provide a solution for at least several of the above stated problems and limitations.

In a first aspect the invention relates to crockery comprising microwave-activatable phase-change material, this according to claims 1-13. In a second aspect the invention relates to a method for using crockery comprising microwave-activatable phase-change material, this according to claim 14.

### Brief description of the figures

The above stated, below stated and other advantageous properties and objectives of the invention will become more apparent, and the invention better understood, on the basis of the following detailed description when read in combination with the accompanying drawings, tables and graph, in which:
Figure 1 shows an exemplary embodiment of parts of a piece of crockery comprising phase-change material contained in a hollow space or cavity formed by the crockery according to the invention;
Figure 2 shows a piece of crockery assembled from the parts as shown in figure 1;
Figure 3 shows a table with measurement results relating to example 2;
Figure 4 shows a table with measurement results relating to example 3;
Figure 5 shows a table with measurement results relating to example 4;
Figure 6 shows a table with measurement results relating to example 5;
Figure 7 shows a graph with measurement results relating to example 6; and
Figure 8 shows a table with measurement results relating to example 7.

### Detailed embodiments

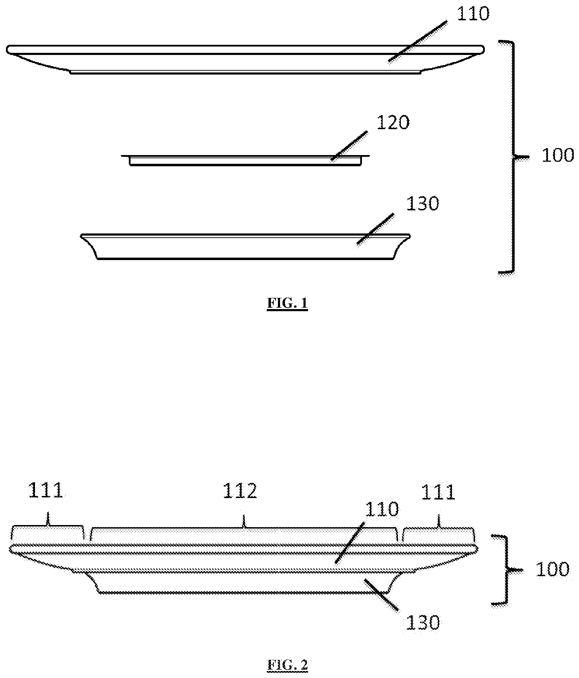

The invention relates to new crockery 100 comprising phase-change material contained in a hollow space or cavity of the crockery 100. As shown in figures 1 and 2, the hollow space or cavity is preferably formed by an upper part 110 and lower part 130 which are attached to each other or assembled onto each other. The crockery 100 is suitable for keeping food and/or beverages warm, wherein the phase-change material can be activated by means of microwave irradiation as in a regular microwave oven. The phase-change material is advantageously positioned under the crockery surface on which the food to be kept warm is placed. After activation by microwave radiation, which brings about the phase transition from solid to liquid state of the phase-change material, the edge portion 111 of the crockery, which is used to manually remove the crockery 100 from the microwave oven, remains cooler than the central portion 112 on which the food can be placed and sufficiently cool to be handled, preferably without having to make use of protective material such as oven gloves.

The invention also relates to a new phase-change material mixture, this being a mixture consisting of an organic phase-change material, preferably an organic acid, an organic alcohol or an organic ester, such as for instance behenyl behenate, or a combination of such phase-change materials, and an organic microwave susceptor or a combination of such organic microwave susceptors, from the group of glycols such as for instance monopropylene glycol and/or dipropylene glycol, which forms or form a quasi-homogeneous or even homogeneous mixture, this both in liquid and in solid phase, also after successive cycles of melting and solidification, this then after initial mixing in liquid state in order to obtain the mixture, this up to a content of microwave susceptor(s) in the mixture of phase-change material (or materials) and microwave susceptor(s) of preferably between 2.5 and 25% by mass, more preferably between 5 and 15% by mass, still more preferably between 7.5 and 12.5% by mass. The phase-change material mixture more preferably comprises an organic ester as phase-change material, still more preferably behenyl behenate, and dipropylene glycol as microwave susceptor, since these form a homogeneous liquid mixture after mixing in the above stated proportions and also form a homogeneous liquid mixture after successive cycles of solidification and melting. Still more preferably, this phase-change material mixture comprising behenyl behenate and dipropylene glycol is substantially free from water. "Substantially free from water" is understood to mean that the phase-change material mixture comprises less than 5% by weight, preferably less than 2% by weight and more preferably less than 1% by weight of water. The presence of water results in non-homogeneity due to separation after successive cycles of solidification and melting. An additional drawback of the presence of water is the risk of transesterification, and thus indirectly the instability of the phase-change material functionality of the phase-change material mixture. In application tests the separation of water from the phase-change material mixture, in the case of phase-change material mixture comprising water, was additionally detected with the observation of undesired hot zones (specifically with increased water content) upon exposure to microwave irradiation. A similar risk occurs when the phase-change material mixture comprises a combination of organic acids, organic alcohols and water, this due to the possibility of esterification, resulting in a non-stable composition of the phase-change material mixture and additionally of separation of the water present.

Such a phase-change material mixture can be prepared by mixing while stirring at a (process) temperature above the melting point of the materials to be mixed, preferably a (process) temperature 20 to 40°C higher than the melting point of the phase-change material.

The organic phase-change material preferably has a melting point in the range of 30 to 120°C, more preferably 50 to 90°C, and still more preferably 65 to 80°C.

The organic phase-change material preferably has a boiling point and flash point higher than 150°C, and more preferably higher than 200°C, and still more preferably higher than 250°C.

The organic microwave susceptor preferably has a boiling point and flashpoint which is at least 25°C higher than the melting point of the phase-change material, more preferably at least 35°C higher than the melting point of the phase-change material, still more preferably at least 45°C higher than the melting point of the phase-change material.

After mixing, the melted phase-change material mixture can be poured into a container, in which the phase-change material mixture can then solidify so that the phase-change material mixture can be obtained in a specific solidified shape. The container necessary for this purpose can consist of a receptacle, but can also be formed by a ring, for instance of metal, preferably aluminium or an aluminium-containing alloy, which is placed on a plate which can be cooled, preferably a coolable metal plate of stainless steel or aluminium. Alternatively, the phase-change material mixture can be pressed into a receptacle in at least partially solidified state in order to thus be given a specific shape.

The invention also relates to packaging of the solid phase-change material mixture (comprising one or more organic phase-change materials and one or more organic microwave susceptors) in a specific shape in a casing (120), for instance a plastic casing, constructed from two individual, optionally thermostabilized (BO)PET films; these being an upper film and a (deep-drawn) lower film which are welded to each other, for instance using thermal welding or for instance also by means of ultrasonic welding or laser welding.

In addition to packaging in said films, the invention also relates to placing of the developed phase-change material mixture in another hard package, for instance in a hollow space or cavity formed by hard materials such as plastic (for instance SPS or syndiotactic polystyrene or, alternatively, (high-density) polypropylene), glass (for instance tempered glass), stoneware, porcelain and so on, in order to obtain crockery such as for instance a double-walled cup or double-walled drinking glass. Materials characterized by a low absorption of microwave radiation are preferably used as hard packaging, particularly for the part of the crockery which is placed on and makes contact with for instance the table.

The invention also relates to the addition of other materials to the phase-change material mixture in order to thus obtain a new material which maintains its solid form at temperatures higher than the melting point of the phase-change material mixture, this for instance by adding a polymer-based composition or by mixing in a material with a high melting point, for instance a melting point higher than 125°C, preferably higher than 150°C, more preferably higher than 175°C, still more preferably higher than 200°C, for which waxes on the basis of polyethylene and polypropylene are for instance options. The materials for this addition for achieving a solid form throughout the phase transition cycle preferably do not have thermally insulating properties, and are thus preferably characterized by a thermal conductivity of at least 0.2 W/m.K.

The invention also relates to placing of the (plastic) casing filled with phase-change material mixture, with a total quantity of phase-change material mixture of 10 to 2000 g, in a cavity (of the crockery) formed by a lower and upper plate or a lower and upper dish (or another whole or other combination of lower and upper part, or another whole or other combination of inner and outer part), this optionally via optional glueing of the upper film of the (plastic) casing comprising the phase-change material mixture to the underside of the upper part, and then optionally assembling, via glueing and optional sealing, the upper part onto the lower part of the plate or dish whole, which can consist of plastic, porcelain, glass, metal or other materials, optionally with a variation of an upper and lower part differing in selection of plastic, porcelain, glass, metal or other materials.

The invention also relates to the use of the crockery comprising the packaged phase-change material mixture in a microwave oven, this by placing this crockery in a microwave oven and activating it at 250 to 1250 W for 1 to 12 min, for instance 600-1000 W for for instance 3 minutes for a single, normal (dinner) plate with for instance 50 g of the phase-change material mixture arranged, for instance 600-1000 W for for instance 5 minutes for a larger (serving) dish (with larger quantity of the phase-change material mixture, for instance 100 or 150 g), or for instance 600-1000 W for for instance 6 minutes for a stack of 6 dinner plates (with for instance 6 x 50 g of the phase-change material mixture).

During this period of exposure to microwave irradiation the phase-change material mixture melts, this because of the generation of heat due to the presence of the microwave susceptor, and the central portion of the crockery is also heated up, while the edge portion heats up less quickly and can continue to be handled owing to the lower temperature than the central portion, for instance with 90 to 95% or more melted phase-change material mixture and with a temperature of roughly 80 to 100°C of the central portion (after for instance 3-4 minutes at 800 W for a dinner plate comprising for instance 50 g of phase-change material mixture with a melting point of for instance 70-75°C), with for the edge portion then a temperature below 70 and even below 60°C.

For (dinner) plates and (serving) dishes without the arranged phase-change material mixture, the edge portion warmed up at the same rate as, and even more quickly than, the central portion in the microwave oven under corresponding conditions of microwave activation, which is a known problem in the heating of plates in the microwave oven, this being the edge portion of dinner plates and serving dishes being too warm or even hot. For regular dinner plates, a temperature below 45°C was determined on the central portion while a temperature above 75°C was determined for the edge portion after for instance 4 minutes in the microwave oven at 800 W. For dinner plates consisting of a regular upper plate with a lower plate mounted thereunder, a temperature below 60°C was measured for the central portion while a temperature above 70°C was observed for the edge portion after for instance 4 minutes in the microwave oven at 800 W.

This determination that, under the same conditions of exposure to microwave irradiation, the temperature of the edge portion of a regular plate was much higher than the edge portion of a similar plate comprising microwave-activatable phase-change material mixture did not match the expectation that, due to the presence of the microwave-activatable phase-change material mixture, the whole of the plate, so the edge portion as well as the central portion, would heat up more quickly compared to a regular plate not comprising the microwave-activatable phase-change material mixture. It is remarkable that the temperature reached at the edge portion is considerably lower for a plate comprising the microwave-activatable phase-change material mixture than for a regular plate, this after an identical exposure to microwave irradiation in respect of power and time.

The same problem of an edge portion which is too hot and cannot be handled without protective equipment occurs in the case that (dinner) plates and (serving) dishes are heated in a regular oven or a heating cabinet (for instance 90 or 120°C for 30 to 120 minutes), wherein the various portions of the crockery heat up similarly, thus also with the same determination of edge portions being too warm or even hot. At the above-stated residence times in said oven and heating cabinet, temperatures were determined for the central portion and edge portion which came close to the set temperature of this oven and heating cabinet, observing herein similar temperatures for the central portion and edge portion of the (dinner) plates and (serving) dishes.

The invention also relates to application of an adhesive which is thermally conductive and/or comprises microwave susceptors, by making use of such an adhesive for glueing the packaged phase-change material mixture to the underside of the surface to be kept warm (of for instance a dinner plate or serving dish) the necessary time for melting of the packaged phase-change material mixture under microwave radiation exposure can be reduced, even by more than 30 and even more than 60 seconds.

The invention provides the technical effect that by arranging the packaged phase-change material mixture in the crockery in combination with the microwave activation (for the phase transition from solid to liquid state) it becomes possible to heat the (dinner) plate or the (serving) dish and to activate the phase-change material functionality, which makes it possible to keep the central portion of the plate or the dish above a determined temperature (for instance 50°C) for for instance 30 to even more than 45 minutes and thus also keep the food placed on the central portion at a temperature of for instance 50°C, this while the edge of the plate is initially sufficiently cool to be handled, for instance initially lower than 60°C and even lower than 50°C.

By performing cyclical tests the durability of the phase-change material mixture and the crockery comprising the packaged phase-change material mixture was also demonstrated, which was determined by the observation of stable required melting times in the microwave oven and the determination of stable keep-warm times after removing the crockery from the microwave and placing food thereon, this being determined by application of temperature sensors and infrared thermometers, this both on the crockery itself and in the food placed on the crockery, and for dinner plates and serving dishes, and in the crockery, this is the case of soup bowls and coffee cups. This observation of stable melting times and keep-warm times shows the stability of the phase-change material functionality, and therefore of the durability of the phase-change material mixture after successive phase transition cycles, or thus consecutive cycles of melting and solidification of the phase-change material mixture.

Besides application in the above stated products such as dinner plates and serving dishes, the invention thus also relates to application in products such as (soup) bowls, (coffee) mugs, (drinking) cups, and so on.

The following describes the invention on the basis of non-limitative examples which illustrate the invention and which are neither intended to limit nor should be interpreted as limiting the scope of the invention.

For advantages and technical effects of elements described below in the examples reference is made to the advantages and technical effects of corresponding elements described above in the detailed description.

### Example 1

The phase-change material, in this example not functionally microwave-activatable, CrodaTherm 74, with melting point 74°C, is heated to about 90°C in a mixing vessel while stirring and kept at about 90°C. From the moment the phase-change material has melted, the microwave susceptor, in this case dipropylene glycol, is added in a proportion of 90% by weight of phase-change material and 10% by weight of microwave susceptor in order to thus obtain a microwave-activatable phase-change material mixture.

After sufficient mixing time, for instance 30 minutes at 90°C, the phase-change material mixture is pumped and poured into circular aluminium rings of 10 to 180 g and with a diameter of 20 to 300 mm, placed on a coolable plate, in this example specifically an aluminium ring with a diameter of 130 mm.

The phase-change material mixture is pumped to the ring in melted state, wherein a mass of 60 g is dosed into the aluminium ring. The aluminium rings with the solidifying phase-change material mixture are cooled until sufficient or full solidification has been achieved. Sufficient solidification is understood to mean that the phase-change material mixture is solidified to an extent such that it can be displaced or handled in simple manner.

Prior to the disc-shaped phase-change material mixture being placed in the crockery, it is packaged in plastic casing 120 on the basis of (BO)PET film such as Hostaphan RHST.

This plastic package 120 consists of two layers of film, the lower film of which is thermally pre-formed using a vacuum so as to create a recess with a diameter of 130 mm and a thickness of 5 mm and so create space for the phase-change material mixture to be arranged.

The solidified phase-change material mixture with specific shape is then placed in the created space. The upper film is then arranged, after which the lower and upper film are thermally double-welded to each other at a temperature of 175°C.

During the thermal welding a vacuum is also created in the plastic package 120 comprising the phase-change material mixture. The absence of air provides for a better contact between the phase-change material mixture and the surface to be kept warm, on which the food is placed, this enabling an improved thermal conductivity and heat transfer.

After the welding, the packaged phase-change material mixture is cut mechanically out of the double film roll. A plastic package 120 is thus formed with a diameter which is about 20 mm greater than the diameter of the disc consisting of the phase-change material mixture which was packaged. For this example use was made of a plastic package comprising phase-change material mixture and consisting of (BO)PET film, with a diameter of 150 mm.

The following steps of the method for producing the assembled plate 100 are described below. Figure 1 illustrates the upper plate 110, lower plate 130 and the plastic casing or the plastic package 120 comprising the phase-change material mixture required to obtain the assembled plate 100. Figure 2 shows the assembled plate 100 wherein the casing 120 with the phase-change material mixture therein is situated in an internal cavity of the plate 100, between upper plate 110 and lower plate 130, and is therefore not visible. The edge portion 111 and the central portion 112 of plate 100 are further designated.

The plastic package 120 comprising phase-change material mixture is placed in an assembled plate 100, for instance with an outer diameter of 27 cm. This plate consists of an upper plate 110 and a lower plate 130, both preferably of porcelain. Together, they form a cavity in the centre of the plate, into which the plastic casing or the plastic package comprising the phase-change material mixture can be placed.

The plastic package 120 comprising the phase-change material mixtureis mounted on the underside of upper plate 110 with a binding agent such as for instance silane-based adhesive in order to have the best possible contact between upper plate 110 and package 120. In this example 7 g of adhesive, such as Bostik Simson ISR 70-03, was applied at the centre of package 120. This was then pressed firmly against the upper plate 110, such that the adhesive is spread over a large part of the surface of the upper side of package 120 and a minimal amount of air is trapped between package 120 and the underside of upper plate 110. This is then left to cure for at least 24 hours.

The lower plate 130 is then glued to upper plate 110, with the plastic package 120 comprising phase-change material mixture glued to the underside of upper plate 110, typically with a silicone-based adhesive such as Dowsil 732. After the second glueing a curing time of preferably at least 24 hours is once again applied.

Finally, the edge between the upper and lower plate is optionally finished with a sealant such as Momentive RTV 118 in order to avoid water seepage and contamination in this edge zone.

An assembled plate 100 as illustrated in figure 2 is thus obtained.

In order to avoid undesired water losses along the underside it is optimal that there is no direct contact between the plastic package 120 comprising phase-change material mixture and the lower plate 130. In this test there was sufficient distance between porcelain lower plate 130 and package 120 to avoid this.

If direct contact cannot be prevented because the distance is too small, it is possible to apply a thin layer of thermally insulating material, such as neoprene, in order to avoid direct thermal contact. As stated above, the assembled plate 100 is a porcelain plate consisting of two parts. The upper plate 110 has a total diameter of 27 cm. The central portion 112 has a diameter of 15 cm and has a thickness of about 6 mm. The mass of upper plate 110 amounts to about 660 g and the mass of lower plate 130 amounts to about 200 g.

### Example 2

In example 2 the initial temperature, particularly at time 0 min, and the cooling of three plates are compared. Using the temperature sensors, this comparison is made for both the central portion 112 and the edge portion 111, this in each case after individual exposure to microwave irradiation at 840 W for 4 minutes.

The first plate is a regular porcelain dinner plate, designated as plate type 1, the second plate is the same regular porcelain dinner plate with a porcelain plate arranged as lower plate, designated as plate type 2, the third plate consists of said dinner plate and lower plate, with the packaged phase-change material mixture in the cavity, designated as plate type 3.

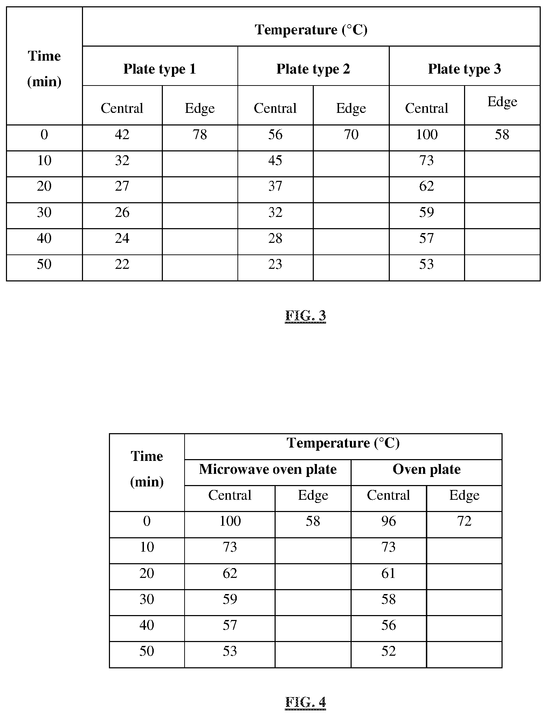

The determined temperatures at successive points in time for the central portion and the edge portion are stated in the table of figure 3. The temperature of the edge portion was only measured at time "0".

For plate type 1 a temperature of 42°C is determined for the central portion, while a temperature of 78°C is measured for the edge portion, after removal from the microwave oven.

For plate type 2 a temperature of 56°C is determined for the central portion, and a temperature of 70°C for the edge portion, after removal from the microwave oven.

For plate type 3 a temperature of 100°C is measured, and a temperature of 58°C is determined for the edge portion, after removal from the microwave oven.

For plate type 1 a temperature of 32°C is determined for the central portion 10 minutes after removal from the microwave oven, 27°C after 20 minutes and 26°C after 30 minutes.

For plate type 2 a temperature of 45°C is determined for the central portion 10 minutes after removal from the microwave oven, 37°C after 20 minutes and 32°C after 30 minutes.

For plate type 3 a temperature of 73°C is determined for the central portion 10 minutes after removal from the microwave oven, 62°C after 20 minutes, 59°C after 30 minutes, 57°C after 40 minutes and 53°C after 50 minutes.

### Example 3

In example 3 the initial temperature and the cooling of the same plate are compared. Using temperature sensors, this comparison is made for both the central portion 112 and the edge portion 111, this after 4 minutes in the microwave oven at 840 W for the microwave oven plate and after 60 minutes in the oven at 120°C for the oven plate.

The plate (referred to as microwave oven plate and oven plate for application in respectively microwave oven and oven) consists of said dinner plate 110 and lower plate 130, with the packaged phase-change material mixture in the cavity.

The determined temperatures are stated in the table of figure 4. The temperature of the edge portion was only measured at time "0".

For the microwave oven plate a temperature of 100°C is determined for the central portion, while a temperature of 58°C is measured for the edge portion, after removal from the microwave oven.

For the oven plate a temperature of 96°C is measured for the central portion, and 72°C for the edge portion, after removal from the oven.

For the microwave oven plate a temperature of 73°C is measured for the central portion 10 minutes after removal from the microwave oven, 62 °C after 20 minutes, 59°C after 30 minutes, 57°C after 40 minutes and 53°C after 50 minutes.

For the oven plate a temperature of 73°C is determined for the central portion 10 minutes after removal from the oven, 61 °C after 20 minutes, 58°C after 30 minutes, 56°C after 40 minutes and 52°C after 50 minutes.

### Example 4

In example 4 the initial temperature and the cooling of a stack of four plates are determined. Using temperature sensors, this determination takes place for both the central portion 112 and the edge portion 111, this after 7 minutes in the microwave oven at 840 W.

The plates are of the plate type 3 as already described in example 2.

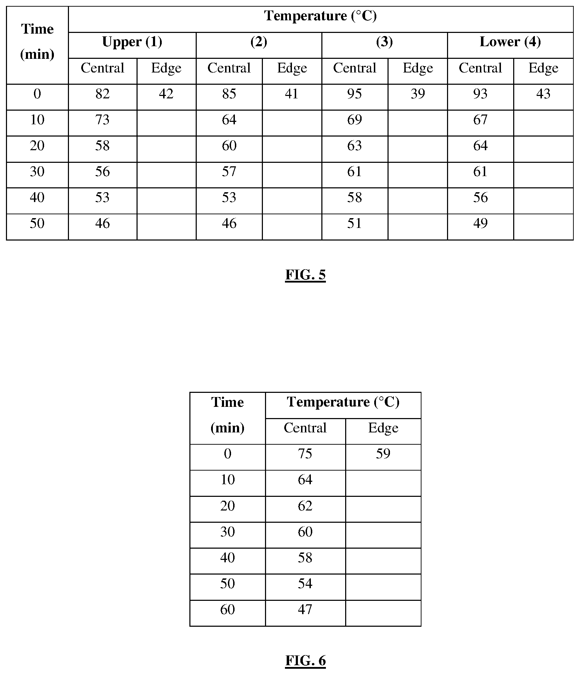

The determined temperatures are stated in the table of figure 5. The temperature of the edge portion was only measured at time "0".

For the upper plate a temperature of 82°C is determined for the central portion, while a temperature of 42°C is measured for the edge portion, after removal from the microwave oven.

For the lower plate a temperature of 93°C is measured for the central portion, and 43°C for the edge portion, after removal from the microwave oven.

For the upper plate a temperature of 73°C is measured for the central portion 10 minutes after removal from the microwave oven, 58 °C after 20 minutes, 56°C after 30 minutes, 53°C after 40 minutes and 46°C after 50 minutes.

For the lower plate a temperature of 67°C is determined for the central portion 10 minutes after removal from the microwave oven, 64 °C after 20 minutes, 61°C after 30 minutes, 56°C after 40 minutes and 49°C after 50 minutes.

### Example 5

In example 5 the initial temperature and the cooling of a serving dish of tempered glass are determined. Using temperature sensors, this determination takes place for both the central portion and the edge portion, this after 6 minutes in the microwave oven at 840 W.

In this example use is made of a serving dish of tempered glass, assembled from an upper part with diameter 35 cm, thickness 4 mm, mass 920 g, and a component with diameter 33 cm, mass 850 g, with three plastic packages, each containing 60 g of the phase-change material mixture, in the cavity.

The determined temperatures are stated in the table of figure 6. The temperature of the edge portion was only measured at time "0".

Following six minutes of activation in the microwave oven the central portion of the dish had a temperature of 75°C, 64°C after 10 minutes, 62°C after 20 minutes, 60°C after 30 minutes, 58°C after 40 minutes, 54°C after 50 minutes and 47°C after 60 minutes. The initial temperature of the edge was 59°C.

### Example 6

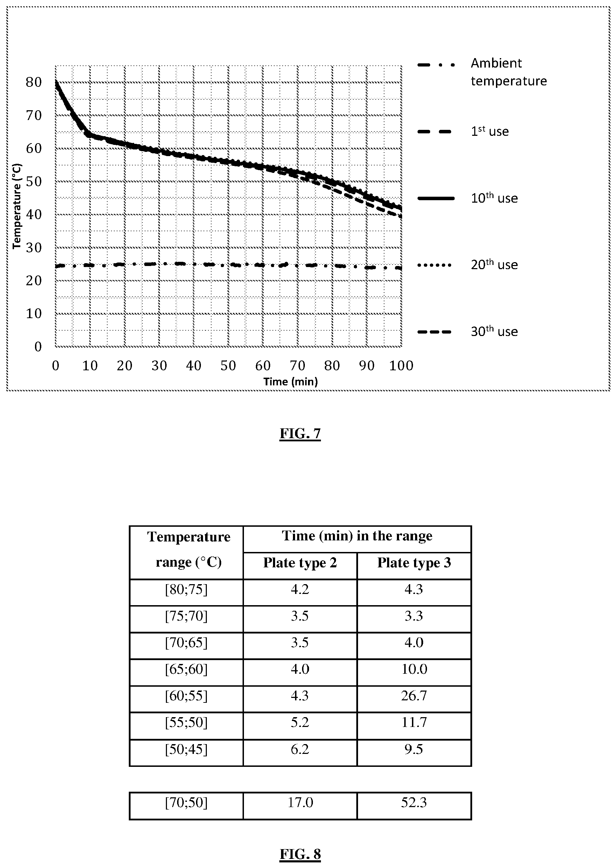

In example 6 the initial temperature and the cooling of a plate of type 3 as described in example 2 are determined, this in each case after successive individual exposures to microwave irradiation (840 W) for 4 minutes, as shown in the graph of figure 7.

It was determined that the cooling of the plate of type 3 in the first use is similar to the cooling after tenth, twentieth and thirtieth use, which is indicative of the stability of the microwave-activatable phase-change material mixture and the crockery comprising the packaged microwave-activatable phase-change material mixture as such.

### Example 7

In this example the cooling of a food dish was determined, more specifically 250 g of prepared lasagne, which was prepared according to the preparation method on the packaging, this being 30 minutes at 180°C in a regular oven. After preparation, portions of 250 g of prepared lasagne were placed on a plate of type 2 and of type 3 as described in example 2.

The determined temperatures are stated in the table of figure 8. The temperature of the edge portion was only measured at time "0".

For the plate of type 2, the lasagne cools to 60° after 15.2 minutes, while for the plate of type 3 this is the case after 21.6 minutes, as stated in table 5.

For the most important temperature interval, this being the cooling from 60°C to 50°C of the lasagne, a time of 9.5 minutes was determined for the plate of type 2, while for a plate of type 3 this took 38.4 minutes.

The total time for the cooling of the lasagne in the temperature range of 70°C to 50°C was 17.0 minutes for the plate of type 2, while this was 52.3 minutes for the plate of type 3.

The skilled person will appreciate that the invention is not limited to the above described embodiments and examples, and that many modifications and variants are possible within the scope of the invention, which is defined solely by the following claims.

## Claims

1. Crockery comprising a phase-change material mixture,
wherein the phase-change material mixture comprises one or more organic phase-change materials selected from the group of organic acids, organic alcohols and organic esters, and one or more organic microwave susceptors selected from the group of glycols,
wherein the phase-change material mixture is contained in a plastic package (120),
wherein the phase-change material mixture is positioned under a central portion (112) of the crockery which is intended for placing food on, and not under an edge portion (111) of the crockery which is intended for being free of food and for handling of the crockery,
wherein the phase-change material mixture is configured to be melted by means of microwave irradiation.

2. Crockery according to claim 1, wherein the organic phase-change material has a melting point in the range of 30 to 120°C, preferably in the range of 50 to 90°C, more preferably in the range of 65 to 80°C.

3. Crockery according to claim 1 or 2, wherein the organic phase-change material has a boiling point and flash point higher than 150°C, preferably higher than 200°C, more preferably higher than 250°C.

4. Crockery according to any one of the claims 1-3, wherein the organic phase-change material is an organic ester.

5. Crockery according to claim 4, wherein the organic phase-change material is behenyl behenate.

6. Crockery according to any one of the claims 1-5, wherein the microwave susceptor comprises monopropylene glycol and/or dipropylene glycol, preferably wherein the microwave susceptor is dipropylene glycol.

7. Crockery according to any one of the foregoing claims, wherein the phase-change material mixture is substantially free from water.

8. Crockery according to any one of the foregoing claims, having a content of microwave susceptors in the phase-change material mixture of 2.5% to 25% by mass and having a total quantity of phase-change material mixture of 10 g to 500 g.

9. according to any one of the foregoing claims, wherein the plastic packag (120) comprises (BO)PET film.

10. Crockery according to any one of the foregoing claims, wherein the crockery comprises material selected from the group of porcelain, plastic, stoneware, glass and tempered glass.

11. Crockery according to any one of the foregoing claims, wherein the phase-change material mixture consists of one organic phase-change material and one organic microwave susceptor.

12. Crockery according to any one of the foregoing claims, being configured such that a 90-95% fraction of melted phase-change material mixture is obtained therein after heating 2 to 12 minutes at 250 to 1250 W in a microwave oven.

13. Crockery according to any one of the foregoing claims, wherein the plastic package (120) is placed in a hollow space of the crockery.

14. Method for producing crockery comprising a phase-change material mixture, the method comprises the steps of:
- at least partially melting and mixing one or more organic phase-change materials selected from the group of organic acids, organic alcohols and organic esters, and one or more organic microwave susceptors selected from the group of glycols,
- solidifying the at least partially melted phase-change material mixture or pressing the at least partially solidified phase-change material mixture into a specific shape,
- arranging the solidified phase-change material mixture in a plastic package (120),
- arranging the phase-change material mixture arranged in the plastic package (120) under a central portion (112) of the crockery which is intended for placing food on, and not under an edge portion (111) of the crockery which is intended for being free of food and for handling of the crockery; preferably wherein:
- the at least partial melting and mixing of one or more organic phase-change materials and one or more organic microwave susceptors takes place at a temperature of up to 40°C higher than the melting point of the phase-change material; and/or
- the plastic package (120) is placed in a hollow space of the crockery.

## Patentansprüche

1. Geschirr, umfassend ein Phasenwechselmaterialgemisch,
wobei das Phasenwechselmaterialgemisch ein oder mehrere organische Phasenwechselmaterialien, die aus der Gruppe von organischen Säuren, organischen Alkoholen und organischen Estern ausgewählt sind, und einen oder mehrere organische Mikrowellensuszeptoren umfasst, die aus der Gruppe von Glykolen ausgewählt sind,
wobei das Phasenwechselmaterialgemisch in einer Kunststoffverpackung (120) enthalten ist,
wobei das Phasenwechselmaterialgemisch unter einem zentralen Abschnitt (112) des Geschirrs, der zum Platzieren von Essen darauf vorgesehen ist, und nicht unter einem Randabschnitt (111) des Geschirrs positioniert ist, der zum Freisein von Essen und zum Handhaben des Geschirrs vorgesehen ist,
wobei das Phasenwechselmaterialgemisch konfiguriert ist, um mittels Mikrowellenstrahlung geschmolzen zu werden.

2. Geschirr nach Anspruch 1, wobei das organische Phasenwechselmaterial einen Schmelzpunkt in dem Bereich von 30 bis 120 °C, vorzugsweise in dem Bereich von 50 bis 90 °C, mehr bevorzugt in dem Bereich von 65 bis 80 °C aufweist.

3. Geschirr nach Anspruch 1 oder 2, wobei das organische Phasenwechselmaterial einen Siedepunkt und einen Flammpunkt höher als 150 °C aufweist, vorzugsweise höher als 200 °C, mehr bevorzugt höher als 250 °C.

4. Geschirr nach einem der Ansprüche 1 bis 3, wobei das organische Phasenwechselmaterial ein organischer Ester ist.

5. Geschirr nach Anspruch 4, wobei das organische Phasenwechselmaterial Behenylbehenat ist.

6. Geschirr nach einem der Ansprüche 1 bis 5, wobei der Mikrowellensuszeptor Monopropylenglykol und/oder Dipropylenglykol umfasst, vorzugsweise wobei der Mikrowellensuszeptor Dipropylenglykol ist.

7. Geschirr nach einem der vorstehenden Ansprüche, wobei das Phasenwechselmaterialgemisch im Wesentlichen wasserfrei ist.

8. Geschirr nach einem der vorstehenden Ansprüche, das einen Gehalt an Mikrowellensuszeptoren in dem Phasenwechselmaterialgemisch von 2,5 % bis 25 % Masse-% aufweist und eine Gesamtmenge an Phasenwechselmaterialgemisch von 10 g bis 500 g aufweist.

9. Geschirr nach einem der vorstehenden Ansprüche, wobei die Kunststoffverpackung (120) (BO)PET-Folie umfasst.

10. Geschirr nach einem der vorstehenden Ansprüche, wobei das Geschirr Material umfasst, das aus der Gruppe von Porzellan, Kunststoff, Steinzeug, Glas und gehärtetem Glas ausgewählt ist.

11. Geschirr nach einem der vorstehenden Ansprüche, wobei das Phasenwechselmaterialgemisch aus einem organischen Phasenwechselmaterial und einem organischen Mikrowellensuszeptor besteht.

12. Geschirr nach einem der vorstehenden Ansprüche, das derart konfiguriert ist, dass darin ein 90-95 %iger Anteil an geschmolzenem Phasenwechselmaterialgemisch nach 2 bis 12 Minuten Erhitzen bei 250 bis 1250 W in einem Mikrowellenofen erhalten wird.

13. Geschirr nach einem der vorstehenden Ansprüche, wobei die Kunststoffverpackung (120) in einem Hohlraum des Geschirrs platziert ist.

14. Verfahren zum Herstellen von Geschirr, umfassend ein Phasenwechselmaterialgemisch, wobei das Verfahren die Schritte umfasst:
- mindestens teilweises Schmelzen und Mischen eines oder mehrerer organischer Phasenwechselmaterialien, die aus der Gruppe von organischen Säuren, organischen Alkoholen und organischen Estern ausgewählt ist, und eines oder mehrerer organischer Mikrowellensuszeptoren, die aus der Gruppe von Glykolen ausgewählt sind,
- Erstarren des mindestens teilweise geschmolzenen Phasenwechselmaterialgemischs oder Pressen des mindestens teilweise erstarrten Phasenwechselmaterialgemischs in eine spezifische Form,
- Anordnen des erstarrten Phasenwechselmaterialgemischs in einer Kunststoffverpackung (120),
- Anordnen des Phasenwechselmaterialgemischs, das in der Kunststoffverpackung (120) angeordnet ist, unter einem zentralen Abschnitt (112) des Geschirrs, der zum Platzieren von Essen darauf vorgesehen ist, und nicht unter einem Randabschnitt (111) des Geschirrs, der zum Freisein von Essen und zum Handhaben des Geschirrs vorgesehen ist: vorzugsweise wobei:
- das mindestens teilweise Schmelzen und Mischen von einem oder mehreren organischen Phasenwechselmaterialien und einem oder mehreren organischen Mikrowellensuszeptoren bei einer Temperatur von bis zu 40 °C höher als der Schmelzpunkt des Phasenwechselmaterials stattfindet; und/oder
- die Kunststoffverpackung (120) in einem Hohlraum des Geschirrs platziert wird.

## Revendications

1. Vaisselle comprenant un mélange de matériaux à changement de phase,
dans laquelle le mélange de matériaux à changement de phase comprend un ou plusieurs matériaux organiques à changement de phase choisis dans le groupe des acides organiques, des alcools organiques et des esters organiques, et un ou plusieurs capteurs d'énergie micro-ondes organiques choisis dans le groupe des glycols,
dans laquelle le mélange de matériaux à changement de phase est contenu dans un emballage en plastique (120),
dans laquelle le mélange de matériaux à changement de phase est positionné sous une partie centrale (112) de la vaisselle sur laquelle de la nourriture est destinée à être placée, et non sous une partie bord (111) de la vaisselle qui est destinée à être exempte de nourriture et à la manipulation de la vaisselle,
dans laquelle le mélange de matériaux à changement de phase est conçu pour être fondu au moyen d'une irradiation par micro-ondes.

2. Vaisselle selon la revendication 1, dans laquelle le matériau organique à changement de phase a un point de fusion compris dans la plage de 30 à 120 °C, de préférence dans la plage de *50* à 90 °C, plus préférablement dans la plage de 65 à 80 °C.

3. Vaisselle selon la revendication 1 ou 2, dans laquelle le matériau organique à changement de phase a un point d'ébullition et un point d'éclair supérieurs à 150 °C, de préférence supérieurs à 200 °C, plus préférablement supérieurs à 250 °C.

4. Vaisselle selon l'une quelconque des revendications 1 à 3, dans laquelle le matériau organique à changement de phase est un ester organique.

5. Vaisselle selon la revendication 4, dans laquelle le matériau organique à changement de phase est du béhénate de béhényle.

6. Vaisselle selon l'une quelconque des revendications 1 à 5, dans laquelle le capteur d'énergie micro-ondes comprend du monopropylène glycol et/ou du dipropylène glycol, de préférence dans laquelle le capteur d'énergie micro-ondes est du dipropylène glycol.

7. Vaisselle selon l'une quelconque des revendications précédentes, dans laquelle le mélange de matériaux à changement de phase est sensiblement exempt d'eau.

8. Vaisselle selon l'une quelconque des revendications précédentes, ayant une teneur en capteurs d'énergie micro-ondes dans le mélange de matériaux à changement de phase de 2,5 % à 25 % en masse et ayant une quantité totale de mélange de matériaux à changement de phase de 10 g à 500 g.

9. Vaisselle selon l'une quelconque des revendications précédentes, dans laquelle l'emballage en plastique (120) comprend un film de (BO)PET.

10. Vaisselle selon l'une quelconque des revendications précédentes, dans laquelle la vaisselle comprend un matériau choisi dans le groupe constitué par la porcelaine, le plastique, le grès, le verre et le verre trempé.

11. Vaisselle selon l'une quelconque des revendications précédentes, dans laquelle le mélange de matériaux à changement de phase est constitué d'un matériau organique à changement de phase et d'un capteur d'énergie micro-ondes organique.

12. Vaisselle selon l'une quelconque des revendications précédentes, étant conçue de telle sorte qu'une fraction de 90 à 95 % de mélange de matériaux à changement de phase fondu est obtenue dans celle-ci à la suite d'un chauffage de 2 à 12 minutes à une température comprise entre 250 et 1250 W dans un four à micro-ondes.

13. Vaisselle selon l'une quelconque des revendications précédentes, dans laquelle l'emballage en plastique (120) est placé dans un espace creux de la vaisselle.

14. Procédé de production de vaisselle comprenant un mélange de matériaux à changement de phase, le procédé comprend les étapes consistant à :
- faire fondre au moins partiellement et mélanger un ou plusieurs matériaux organiques à changement de phase choisis dans le groupe des acides organiques, alcools organiques et esters organiques, et un ou plusieurs capteurs d'énergie micro-ondes organiques choisis dans le groupe des glycols,
- solidifier le mélange de matériaux à changement de phase au moins partiellement fondu ou presser le mélange de matériaux à changement de phase au moins partiellement solidifié pour lui donner une forme spécifique,
- agencer le mélange de matériaux à changement de phase solidifié dans un emballage en plastique (120),
- agencer le mélange de matériaux à changement de phase agencé dans l'emballage en plastique (120) sous une partie centrale (112) de la vaisselle sur laquelle de la nourriture est destinée à être placée, et non sous une partie bord (111) de la vaisselle qui est destinée à être exempte de nourriture et à la manipulation de la vaisselle : de préférence dans lequel :
- la fusion au moins partielle et le mélange d'un ou plusieurs matériaux organiques à changement de phase et d'un ou plusieurs capteurs d'énergie micro-ondes organiques ont lieu à une température allant jusqu'à 40 °C de plus que le point de fusion du matériau à changement de phase ; et/ou
- l'emballage en plastique (120) est placé dans un espace creux de la vaisselle.
